# EUROPEAN PATENT APPLICATION

(11) **EP 4 075 547 A1**
(43) Date of publication of application: **19.10.2022**
(21) Application number: 20959312.8
(22) Date of filing: 31.10.2020
(51) Int. Cl.: H01M 4/36

(54) **POSITIVE ELECTRODE ACTIVE MATERIAL AND FABRICATION METHOD THEREFOR, SECONDARY BATTERY, BATTERY MODULE, BATTERY PACK, AND APPARATUS**

(71) Applicant: Contemporary Amperex Technology Co., Limited, Fujian 352100 (CN)
(72) Inventor: HE, Jinhua, Ningde, Fujian 352100 (CN); WU, Qi, Ningde, Fujian 352100 (CN); FAN, Jingpeng, Ningde, Fujian 352100 (CN); CHEN, Qiang, Ningde, Fujian 352100 (CN); ZHAO, Yuxiang, Ningde, Fujian 352100 (CN)
(74) Representative: von Tietzen und Hennig, Nikolaus
(86) International application number: PCT/CN2020/125667
(87) International publication number: WO 2022/088151

(57) **Abstract**

This application provides a positive-electrode active material and a manufacturing method thereof. The positive-electrode active material includes a positive-electrode active material matrix and a coating layer, and the coating layer coats a surface of the positive-electrode active material matrix. The positive-electrode active material matrix is Li₁₊ₐ[NiₓCo_{y}Mn_{z}M_{b}]O₂, where 0 < x < 1, 0 ≤ y < 0.3, 0 ≤ z < 0.3, 0 < a < 0.2, 0 < b < 0.2, x + y + z + b = 1, and preferably, 0.8 ≤ x < 1. The element M is selected from more than one of Mg, Ca, Sb, Ce, Ti, Zr, Al, Zn, and B, and the coating layer contains a cobalt-containing compound, an aluminum-containing compound, and a boron-containing compound.

## Description

### TECHNICAL FIELD

This application relates to the field of lithium battery technologies, and in particular, to a positive-electrode active material and a manufacturing method thereof, a secondary battery, a battery module, a battery pack, and an apparatus.

### BACKGROUND

In recent years, with increasingly wide application of lithium-ion batteries, the lithium-ion batteries are widely used in energy storage power supply systems such as water power stations, thermal power stations, wind power stations, and solar power stations, and in many fields such as electric tool, electric bicycle, electric motorcycle, electric vehicle, military equipment, and aerospace. Due to great development of the lithium-ion batteries, higher requirements are imposed on energy density, cycling performance, safety performance, and so on of the lithium-ion batteries. In addition, as selection of positive-electrode active materials are increasingly limited, high nickel positive-electrode active materials are considered as the optimal choice to meet the requirement for high energy density.

However, with continuously increasing of the nickel content, structural stability of the high nickel positive-electrode active material becomes worse. An effective method to improve rate performance and cycling performance of materials is coating or doping. However, the existing methods all cause different degrees of damage to performance of the lithium-ion batteries. For example, the gram capacity of the lithium-ion batteries is reduced and the cycling performance of the lithium-ion batteries becomes worse. Therefore, existing coated or doped positive-electrode materials still need to be improved.

### SUMMARY

This application has been made in view of the foregoing issues. An objective of this application is to provide a positive-electrode active material and a manufacturing method thereof, so that a secondary battery including the material has higher energy density and better cycling performance and safety performance.

To achieve the foregoing objective, this application provides a positive-electrode active material and a manufacturing method thereof, a secondary battery, a battery module, a battery pack, and an apparatus.

A first aspect of this application provides a positive-electrode active material. The positive-electrode active material includes a positive-electrode active material matrix and a coating layer, and the coating layer coats a surface of the positive-electrode active material matrix. The positive-electrode active material matrix is Li₁₊ₐ[NiₓCo_{y}Mn_{z}M_{b}]O₂, where 0 < x < 1, 0 ≤ y < 0.3, 0 ≤ z < 0.3, 0 < a < 0.2, 0 < b < 0.2, x + y + z + b = 1, and optionally, 0.8 ≤ x < 1. The element M is selected from more than one of Mg, Ca, Sb, Ce, Ti, Zr, Al, Zn, and B, and the coating layer contains a cobalt-containing compound, an aluminum-containing compound, and a boron-containing compound.

Therefore, in this application, the cobalt-containing compound, the aluminum-containing compound, and the boron-containing compound jointly coat the surface of the positive-electrode active material, and cooperate to take an effect of improving rate performance and cycling performance of the positive-electrode active material, and obviously reducing interface side reactions between the positive-electrode active material and an electrolyte solution to increase a capacity.

In any embodiment, the cobalt-containing compound is selected from more than one of cobalt oxide, cobalt salt, cobalt hydroxide, and cobalt oxyhydroxide. Therefore, the cobalt-containing compound can uniformly effectively coat the surface of the positive-electrode active material.

In any embodiment, the aluminum-containing compound is selected from more than one of aluminum oxide, aluminum hydroxide, aluminum salt, and aluminum halide. Therefore, the aluminum-containing compound can uniformly effectively coat the surface of the positive-electrode active material.

In any embodiment, the boron-containing compound is selected from more than one of boron oxide, boron halide, boric acid, borate, and organoboron compound. Therefore, the boron-containing compound can uniformly effectively coat the surface of the positive-electrode active material.

In any embodiment, thickness of the coating layer is 0.01 µm-2 µm, and optionally, 0.1 µm-1 µm. If the thickness of the coating layer is within the foregoing range, interface side reactions between an electrolyte solution and the positive-electrode active material can be effectively prevented, and a capacity of the positive-electrode active material can be increased.

In any embodiment, with respect to a total weight of the positive-electrode active material matrix, a weight proportion of a total coating amount of element cobalt, element aluminum, and element boron in the coating layer is 1000 ppm-22000 ppm, and optionally, 1000 ppm-15000 ppm. Therefore, an appropriate coating amount can increase a capacity, rate performance, and cycling performance of the positive-electrode active material.

In any embodiment, with respect to the total weight of the positive-electrode active material matrix, a weight proportion of a coating amount of the element cobalt in the coating layer is 1000 ppm-20000 ppm, optionally, 1000 ppm-19000 ppm, and further optionally, 1000 ppm-13000 ppm. Therefore, an appropriate coating amount can better increase a capacity, rate performance, and cycling performance of the positive-electrode active material.

In any embodiment, with respect to the total weight of the positive-electrode active material matrix, a weight proportion of a coating amount of the element aluminum in the coating layer is 100 ppm-3000 ppm, optionally, 100 ppm-2900 ppm, and further optionally, 500 ppm-2000 ppm. Therefore, an appropriate coating amount can better improve cycling performance, storage performance, and safety performance of the positive-electrode active material.

In any embodiment, with respect to the total weight of the positive-electrode active material matrix, a weight proportion of a coating amount of the element boron in the coating layer is 100 ppm-2000 ppm, optionally, 100 ppm-1900 ppm, and further optionally, 500 ppm-1500 ppm. Therefore, an appropriate coating amount can further better improve cycling performance, storage performance, and safety performance of the positive-electrode active material.

In any embodiment, a weight ratio of an element aluminum and an element boron in the coating layer is 0.5-2:1, and optionally, 1-2:1. Therefore, cycling performance and safety performance of the positive-electrode active material can be further improved.

A second aspect of this application further provides a manufacturing method of a positive-electrode active material.

The method includes:
step S1: providing a positive-electrode active material matrix doped with element M, where M is selected from more than one of Mg, Ca, Sb, Ce, Ti, Zr, Al, Zn, and B;
step S2: mixing the positive-electrode active material matrix doped with the element M and a cobalt-containing compound, and performing sintering to obtain an intermediate; and
step S3: adding the intermediate, an aluminum-containing compound, and a boron-containing compound into a mixer for mixing and sintering to obtain a positive-electrode active material coated with the cobalt-containing compound, the aluminum-containing compound, and the boron-containing compound.

In any embodiment, step S1: adding a lithium salt, a nickel cobalt manganese-containing positive-electrode active material precursor, and an M-containing compound into the mixer for mixing to obtain a mixture a, and adding the mixture a into a kiln for sintering to obtain the positive-electrode active material matrix doped with the element M, where the nickel cobalt manganese-containing positive-electrode active material precursor is [NiₓCo_{y}Mn_{z}](OH)₂, 0 < x < 1, 0 ≤ y < 0.3, 0 ≤ z < 0.3, optionally, 0.8 ≤ x < 1, and the element M is selected from more than one of Mg, Ca, Sb, Ce, Ti, Zr, Al, Zn, and B; step S2: adding the positive-electrode active material matrix doped with the element M and the cobalt-containing compound into the mixer for mixing to obtain a mixture b, and adding the mixture b into the kiln for sintering to obtain the intermediate; and step S3: adding the intermediate, the aluminum-containing compound, and the boron-containing compound into the mixer for mixing to obtain a mixture c, and adding the mixture c into the kiln for sintering to obtain the positive-electrode active material coated with the cobalt-containing compound, the aluminum-containing compound, and the boron-containing compound.

Therefore, in the manufacturing method of the positive-electrode active material in this application, the element M can be uniformly doped in the positive-electrode active material matrix, structural stability of the positive-electrode active material can be effectively improved, and a coating layer containing the cobalt-containing compound, the boron-containing compound, and the aluminum-containing compound uniformly coats the surface of the positive-electrode active material matrix. In addition, in the manufacturing method of the positive-electrode active material in this application, not only a complicated manufacturing process in the existing manufacturing method can be avoided, but also production costs can be reduced.

In any embodiment, in step S1, the lithium salt, the nickel cobalt manganese-containing positive-electrode active material precursor, and the M-containing compound are added into the mixer for mixing, at a molar ratio of element lithium in the lithium salt and a sum of element nickel, element cobalt, and element manganese in the nickel cobalt manganese-containing positive-electrode active material precursor of Li/(Ni + Co + Mn) = 0.9-1.1 and at a doping percentage of the element M of 1000 ppm-5000 ppm. Therefore, the element M can be uniformly doped, and structural stability of the material can be effectively improved.

In any embodiment, step S1 is performed at the following sintering conditions: a sintering temperature is 700°C-950°C; a sintering duration is 10h-20h; and a sintering atmosphere is air or oxygen. Therefore, the doping of the element M can be performed efficiently.

In any embodiment, in step S2, an amount of the cobalt-containing compound added is with respect to a total weight of the positive-electrode active material matrix, an amount of element cobalt added is 1000 ppm-20000 ppm, optionally, 1000 ppm-19000 ppm, and further optionally, 1000 ppm-13000 ppm. Therefore, interface side reactions of the material can be further reduced. In addition, an appropriate coating amount can further better improve cycling performance, storage performance, and safety performance of the material.

In any embodiment, step S2 is performed at the following sintering conditions: a sintering temperature is 500°C-700°C; a sintering duration is 5h-15h; and a sintering atmosphere is air or oxygen. Therefore, a coating effect can be improved.

In any embodiment, in step S3, an amount of the aluminum-containing compound added is with respect to a total weight of the positive-electrode active material matrix, an amount of element aluminum added is 100 ppm-3000 ppm, optionally, 100 ppm-2900 ppm, and further optionally, 500 ppm-2000 ppm; and an amount of the boron-containing compound added is with respect to a total weight of the positive-electrode active material matrix, an amount of element boron added is 100 ppm-2000 ppm, optionally, 100 ppm-1900 ppm, and further optionally, 500 ppm-1500 ppm. Therefore, interface side reactions of the material can be further reduced. In addition, an appropriate coating amount can further better improve cycling performance, storage performance, and safety performance of the material.

In any embodiment, step S3 is performed at the following sintering conditions: a sintering temperature is 200°C-500°C, and optionally, 200°C-400°C; a sintering duration is 5h-15h, and optionally, 5h-10h; and a sintering atmosphere is air or oxygen. Therefore, the aluminum-containing compound and the boron-containing compound can firmly coat surfaces of particles in the positive-electrode active material without penetrating into inner layers of the particles, thereby improving a coating effect.

A third aspect of this application provides a secondary battery, including the positive-electrode active material in the first aspect of this application or the positive-electrode active material prepared by using the method in the second aspect of this application.

A fourth aspect of this application provides a battery module, including the secondary battery in the third aspect of this application.

A fifth aspect of this application provides a battery pack, including the battery module in the fourth aspect of this application.

A sixth aspect of this application provides an apparatus, including more than one of the secondary battery in the third aspect of this application, the battery module in the fourth aspect of this application, or the battery pack in the fifth aspect of this application.

### BRIEF DESCRIPTION OF DRAWINGS

FIG. 1 is a scanning electron microscope image of a positive-electrode active material obtained in Example 1.
FIG. 2 shows first charge and discharge curves of a button cell made of a positive-electrode active material obtained in Example 1.

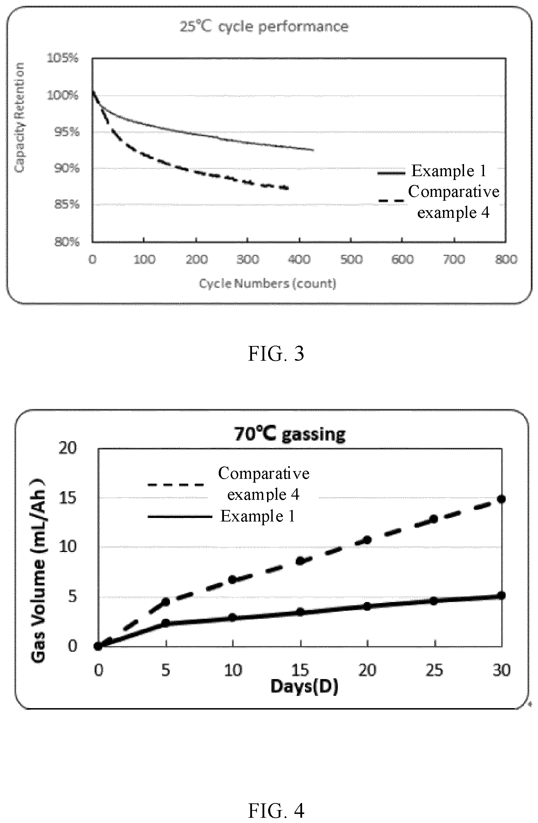

FIG. 3 shows comparative curves of fully-charge 25°C cycling performance test results of secondary batteries respectively made of positive-electrode active materials obtained in Example 1 and Comparative Example 4.
FIG. 4 shows comparative curves of fully-charge 70°C gassing performance test results of secondary batteries respectively made of positive-electrode active materials obtained in Example 1 and Comparative Example 4.
FIG. 5 is a schematic diagram of a secondary battery according to an embodiment of this application.
FIG. 6 is an exploded view of the secondary battery according to the embodiment of this application in FIG. 5.
FIG. 7 is a schematic diagram of a battery module according to an embodiment of this application.
FIG. 8 is a schematic diagram of a battery pack according to an embodiment of this application.
FIG. 9 is an exploded view of the battery pack according to the embodiment of this application in FIG. 8.
FIG. 10 is a schematic diagram of an apparatus using a secondary battery as a power source according to an embodiment of this application.

### Reference signs are described as follows:

1. battery pack;
2. upper box body;
3. lower box body;
4. battery module;
5. secondary battery;
51. housing;
52. electrode assembly; and
53. top cover assembly.

### DESCRIPTION OF EMBODIMENTS

The following specifically discloses embodiments of a positive-electrode active material and a manufacturing method thereof, a positive electrode plate, a secondary battery, a battery module, a battery pack, and an apparatus in this application with appropriate reference to detailed descriptions of accompanying drawings. However, unnecessary detailed descriptions may be omitted. For example, detailed descriptions of a well-known matter or overlapping descriptions of an actual identical structure has been omitted. This is to avoid unnecessary cumbersomeness of the following descriptions, to facilitate understanding by persons skilled in the art. In addition, accompanying drawings and the following descriptions are provided for persons skilled in the art to fully understand this application and are not intended to limit the subject described in the claims.

For brevity, this application specifically discloses some numerical ranges. However, any lower limit may be combined with any upper limit to form an unspecified range, and any lower limit may be combined with another lower limit to form an unspecified range, and likewise, any upper limit may be combined with any other upper limit to form an unspecified range. In addition, each individually disclosed point or single numerical value, as a lower limit or an upper limit, may be combined with any other point or single numerical value or combined with another lower limit or upper limit to form an unspecified range.

### Positive-electrode active material

In an embodiment of this application, this application provides a positive-electrode active material. The positive-electrode active material includes a positive-electrode active material matrix and a coating layer coating a surface of the positive-electrode active material matrix. The positive-electrode active material matrix is Li₁₊ₐ[NiₓCo_{y}Mn_{z}M_{b}]O₂, where 0 < x < 1, 0 ≤ y < 0.3, 0 ≤ z < 0.3, 0 < a < 0.2, 0 < b < 0.2, x + y + z + b = 1, and preferably, 0.8 ≤ x < 1. The element M is selected from more than one of Mg, Ca, Sb, Ce, Ti, Zr, Al, Zn, and B, and the coating layer contains a cobalt-containing compound, an aluminum-containing compound, and a boron-containing compound.

Although a mechanism is not clear, the applicants of this application has accidentally found that the cobalt-containing compound, the aluminum-containing compound, and the boron-containing compound jointly coat the surface of the positive-electrode active material, so that rate performance and cycling performance of the positive-electrode active material can be greatly improved, and interface side reactions between the positive-electrode active material and an electrolyte solution can also be obviously reduced to increase a capacity. In addition, even if this application is applied to a positive-electrode active material with high nickel content (Ni content ≥ 80%) and poor structural stability, the element M is doped in the positive-electrode active material, and the cobalt-containing compound, the aluminum-containing compound, and the boron-containing compound jointly coat the surface of the positive-electrode active material, so that not only structural stability of the positive-electrode active material can be effectively improved, but also energy density can be greatly improved, and the cycling performance and the rate performance of the positive-electrode active material can be improved.

In some embodiments, for example, from a perspective of uniformly effectively coating the surface of the positive-electrode active material, and further reducing the interface side reactions between the positive-electrode active material and the electrolyte solution, the cobalt-containing compound is selected from more than one of cobalt oxide, cobalt salt, cobalt hydroxide, and cobalt oxyhydroxide. As an example of cobalt oxide, CoO and Co₃O₄ may be listed. As an example of cobalt salt, cobalt acetate, cobalt oxalate, and cobalt carbonate may be listed.

In some embodiments, for example, from a perspective of uniformly effectively coating the surface of the positive-electrode active material, and further reducing the interface side reactions between the positive-electrode active material and the electrolyte solution, the aluminum-containing compound is selected from more than one of aluminum oxide, aluminum hydroxide, aluminum salt, and aluminum halide. As an example of aluminum oxide, Al₂O₃ may be listed. As an example of aluminum salt, Al₂(SO₄)₃ and Al(NO)₃ may be listed. As an example of aluminum halide, AlCl₃ may be listed.

In some embodiments, for example, from a perspective of uniformly effectively coating the surface of the positive-electrode active material, and further reducing the interface side reactions between the positive-electrode active material and the electrolyte solution, the boron-containing compound is selected from more than one of boron oxide, boron halide, boric acid, borate, and organoboron compound. As an example of boron oxide, B₂O₃ may be listed. As an example of boron halide, BF₃, BCl₃, BBr₃, and BI₃ may be listed. As an example of boric acid, H₃BO₃ may be listed. As an example of borate, B₂(SO₄)₃ and B(NO₃)₃ may be listed. As an example of the organoboron compound, BN, H₂BO₅P, C₅M₆B(OH)₂, C₃H₉B₃O₆, (C₂H₅O)₃B, and (C₃H₇O)₃B may be listed.

In some embodiments, for example, thickness of the coating layer is 0.01 µm-2 µm, and optionally, 0.1 µm-1 µm. If thickness of the coating layer is within the foregoing range, the interface side reactions between the electrolyte solution and the positive-electrode active material can be effectively prevented, and the capacity of the positive-electrode active material can be increased.

In some embodiments, for example, with respect to a total weight of the positive-electrode active material matrix, a weight proportion of a total coating amount of element cobalt, element aluminum, and element boron in the coating layer is 1000 ppm-22000 ppm, and optionally, 1000 ppm-15000 ppm. Therefore, an appropriate coating amount can increase the capacity, the rate performance, and the cycling performance of the positive-electrode active material.

In some embodiments, for example, with respect to a total weight of the positive-electrode active material matrix, a weight proportion of a coating amount of the element cobalt in the coating layer is 1000 ppm-20000 ppm, optionally, 1000 ppm-19000 ppm, and further optionally, 1000 ppm-13000 ppm. Therefore, coating an appropriate coating amount of the cobalt-containing compound can reduce the interface side reactions of the positive-electrode active material, and increase the capacity, the rate performance, and the cycling performance of the positive-electrode active material.

In some embodiments, for example, with respect to the total weight of the positive-electrode active material matrix, a weight proportion of a coating amount of the element aluminum in the coating layer is 100 ppm-3000 ppm, optionally, 100 ppm-2900 ppm, and further optionally, 500 ppm-2000 ppm. Therefore, coating an appropriate coating amount of the aluminum-containing compound can further obviously reduce the interface side reactions of the positive-electrode active material and protect the positive-electrode active material, thereby further better improving cycling performance, storage performance, and safety performance of the positive-electrode active material.

In some embodiments, for example, with respect to the total weight of the positive-electrode active material matrix, a weight proportion of a coating amount of the element boron in the coating layer is 100 ppm-2000 ppm, optionally, 100 ppm-1900 ppm, and further optionally, 500 ppm-1500 ppm. Therefore, coating an appropriate coating amount of the boron-containing compound can further reduce the interface side reactions of the material and increase the capacity of the positive-electrode active material, and in addition further improve the rate performance and the cycling performance of the positive-electrode active material.

In some embodiments, a weight ratio of an element aluminum and an element boron in the coating layer is 0.5-2:1, and optionally, 1-2:1. The applicant of this application has found that although the side reactions between the electrolyte solution and the surface of the positive-electrode active material can be effectively inhibited and the cycling performance of the battery can be improved by coating the surface of the positive-electrode active material with the aluminum-containing compound, a gram capacity of the positive-electrode material may be reduced with continuous increase of percentage of the aluminum-containing compound. In addition, percentage of lithium impurity in the positive-electrode active material can be effectively reduced and the gram capacity of the positive-electrode active material can be further increased by coating the surface of the positive-electrode active material with the boron-containing compound. Moreover, the applicant of this application has accidentally found that in a case that the weight ratio of the element aluminum and the element boron in the coating layer is within the foregoing range, the capacity of the positive-electrode material can be greatly increased and the cycling performance of the positive-electrode active material can be further improved. Furthermore, in a case that the weight ratio of the element aluminum and the element boron is within the foregoing specified range, a crystal structure of the positive-electrode material can also be effectively protected, thereby further improving the safety performance of the positive-electrode active material.

In some embodiments, for example, the positive-electrode active material is secondary particles formed by agglomeration of primary particles or monocrystalline particles.

In some embodiments, in a case that the positive-electrode active material is the secondary particles formed by agglomeration of the primary particles, an average particle size of the primary particles in the secondary particles is 100 nm-1000 nm. It should be noted that the average particle size of the primary particles in the secondary particles is an average value of particle sizes of all primary particles in a scanning electron microscope image at magnifications of 10000 times.

In some embodiments, a median particle size by volume D50 of the positive-electrode active material that is the secondary particles is 2 µm-15 µm, and optionally, 2.5 µm-12 µm.

In some embodiments, a specific surface area of the positive-electrode active material that is the secondary particles is 0.2m²/g-1.0m²/g, and optionally, 0.3m²/g-0.8m²/g.

In some embodiments, in a case that the positive-electrode active material is the monocrystalline particles, a median particle size by volume D50 of the positive-electrode active material that is the monocrystalline particles is 1.0 µm-8.0 µm, and optionally, 2.0 µm-4.0 µm.

In some embodiments, a specific surface area of the positive-electrode active material that is the monocrystalline particles is 0.4m²/g-2m²/g, and optionally, 0.5m²/g-1.5m²/g.

Therefore, the positive-electrode active material manufactured by using the foregoing manufacturing method has a better crystal structure. This is conductive to transferring of lithium ions, and improves the rate performance and the cycling performance.

In addition, the median particle size by volume D50 is a corresponding particle size when a cumulative volume percentage of the positive-electrode active material reaches 50%. In this application, the median particle size by volume D50 of the positive-electrode active material may be measured in a laser diffraction particle size analyzing method. For example, according to the standard GB/T 19077-2016, a laser particle size analyzer (for example, Malvern Master Size 3000) is used.

In some embodiment, the cobalt-containing compound may be, for example, the following cobalt-containing compound. A particle size of the cobalt-containing compound may be 0.001 µm-10 µm, and for example, 0.001 µm-1 µm. Because the nanoscale cobalt-containing compound is used, the surface of the positive-electrode material matrix can be uniformly effectively coated, thereby reducing the interface side reactions between the material and the electrolyte solution.

### Manufacturing method of positive-electrode active material

In an embodiment of this application, this application further provides a manufacturing method of a positive-electrode active material. The method includes:
step S1: adding lithium salt, a nickel cobalt manganese-containing positive-electrode active material precursor, and an M-containing compound into a mixer for mixing to obtain a mixture a, and adding the mixture a into a kiln for sintering to obtain a positive-electrode active material matrix doped with the element M, where the nickel cobalt manganese-containing positive-electrode active material precursor is [NiₓCo_{y}Mn_{z}](OH)₂, 0 < x < 1, 0 ≤ y < 0.3, 0 ≤ z < 0.3, optionally, 0.8 ≤ x < 1, and the element M is selected from more than one of Mg, Ca, Sb, Ce, Ti, Zr, Al, Zn, and B;
step S2: adding the positive-electrode active material matrix doped with the element M and a cobalt-containing compound into the mixer for mixing to obtain a mixture b, and adding the mixture b into the kiln for sintering to obtain an intermediate (a positive-electrode active material coated with which the cobalt-containing compound); and
step S3: adding the intermediate, an aluminum-containing compound, and a boron-containing compound into the mixer for mixing to obtain a mixture c, and adding the mixture c into the kiln for sintering to obtain a positive-electrode active material coated with the cobalt-containing compound, the aluminum-containing compound, and the boron-containing compound.

Therefore, although a mechanism is not clear, the applicant of this application has accidentally found that in the manufacturing method of the positive-electrode active material in this application, the element M can be uniformly doped in the positive-electrode active material matrix, and structural stability of the positive-electrode active material can be effectively improved. In addition, interface side reactions between the positive-electrode active material and an electrolyte solution can be effectively inhibited by uniformly coating the surface of the positive-electrode active material matrix with a coating layer containing the cobalt-containing compound, the aluminum-containing compound, and the boron-containing compound. This increases a capacity of the positive-electrode active material, effectively improves rate performance of the positive-electrode active material, and further effectively improves cycling performance, storage performance, and safety performance of the positive-electrode active material. In addition, in the manufacturing method of the positive-electrode active material in this application, not only a complicated manufacturing process in the existing manufacturing method such as wet coating can be avoided, and but also production costs can be reduced. In the manufacturing method of this application, a step-by-step coating method is used, so that the prepared positive-electrode active material has both better cycling performance and a higher capacity. If the positive-electrode active material coated with the cobalt-containing compound, the boron-containing compound, and the aluminum-containing compound, in a case that a coating temperature is set too high, aluminum and boron may penetrate into inner layers of particles in the positive-electrode active material, the boron-containing compound is easy to volatilize at a high temperature, and a coating effect is affected, thereby affecting the capacity and the cycling performance; and in a case that a coating temperature is set too low, the cobalt-containing compound cannot effectively coat outer layers of particles in the positive-electrode active material, and may not take a coating effect of coating the particles in the positive-electrode active material, thereby affecting the cycling and safety performance. Therefore, step-by-step coating can avoid affecting the coating effect when the positive-electrode active material coated with the cobalt-containing compound, the aluminum-containing compound, and the boron-containing compound.

In some embodiments, in step S1, the lithium salt, the nickel cobalt manganese-containing positive-electrode active material precursor, and the M-containing compound are added into the mixer for mixing, at a molar ratio of element lithium in the lithium salt and a sum of element nickel, element cobalt, and element manganese in the nickel cobalt manganese-containing positive-electrode active material precursor of Li/(Ni + Co + Mn) = 0.9-1.1, and at a doping percentage of the element M of 1000 ppm-5000 ppm. Therefore, the element M can be uniformly doped, and structural stability of the material can be effectively improved.

In some embodiments, step S1 is performed at the following sintering conditions: a sintering temperature is 700°C-950°C; a sintering duration is 10h-20h; and a sintering atmosphere is air or oxygen. Therefore, the doping of the element M can be performed efficiently, and the positive-electrode material matrix obtained through this process has a better crystal structure. This is conductive to transferring of lithium ions, and can improve the rate performance and the cycling performance.

In some embodiments, in step S2, an amount of the cobalt-containing compound added is with respect to a total weight of the positive-electrode active material matrix, and an amount of element cobalt added is 1000 ppm-20000 ppm, preferably, 1000 ppm-19000 ppm, and further preferably, 1000 ppm-13000 ppm. Therefore, the cobalt-containing compound can uniformly effectively coat the surface of the positive-electrode active material matrix, thereby reducing the interface side reactions between the positive-electrode active material and the electrolyte solution. in addition, an appropriate coating amount can increase the capacity, the rate performance, and the cycling performance of the positive-electrode active material.

In some embodiments, step S2 is performed at the following sintering conditions: a sintering temperature is 500°C-700°C; a sintering duration is 5h-15h; and a sintering atmosphere is air or oxygen. Therefore, the cobalt-containing compound can firmly coat surfaces of the particles in the positive-electrode active material without penetrating into inner layers of the particles, thereby improving a coating effect.

In some embodiments, in step S3, an amount of the aluminum-containing compound added is with respect to a total weight of the positive-electrode active material matrix, an amount of element aluminum added is 100 ppm-3000 ppm, optionally, 100 ppm-2900 ppm, and further optionally, 500 ppm-2000 ppm; and an amount of the boron-containing compound added is with respect to a total weight of the positive-electrode active material matrix, and an amount of element boron added is 100 ppm-2000 ppm, optionally, 100 ppm-1900 ppm, and further optionally, 500 ppm-1500 ppm. Therefore, interface side reactions of the material can be further reduced. In addition, an appropriate coating amount can further better improve cycling performance, storage performance, and safety performance of the material.

In some embodiments, step S3 is performed at the following sintering conditions: a sintering temperature is 200°C-500°C, and optionally, 200°C-400°C; a sintering duration is 5h-15h, and optionally, 5h-10h; and a sintering atmosphere is air or oxygen. Therefore, the aluminum-containing compound and the boron-containing compound can firmly coat surfaces of particles in the positive-electrode active material without penetrating into inner layers of the particles, thereby effectively improving a coating effect. Therefore, the interface side reactions of the positive-electrode active material can be further reduced, thereby improving the cycling performance, storage performance, and safety performance of the positive-electrode active material.

In some embodiments, for example, the nickel cobalt manganese-containing positive-electrode active material precursor is [NiₓCo_{y}Mn_{z}](OH)₂, where 0 < x < 1, 0 ≤ y < 0.3, 0 ≤ z < 0.3, and further, 0.8 ≤ x < 1.

In some embodiments, for example, the lithium salt may be selected from more than one of lithium carbonate and lithium hydroxide.

In addition, the following describes a secondary battery, a battery module, a battery pack, and an apparatus in this application with appropriate reference to the accompanying drawings.

An embodiment of this application provides a secondary battery.

Normally, the secondary battery includes a positive electrode plate, a negative electrode plate, an electrolyte, and a separator. In a battery charging/discharging process, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

### [Positive electrode plate]

The positive electrode plate includes a positive-electrode current collector and a positive-electrode film layer disposed on at least one surface of the positive-electrode current collector, and the positive-electrode film layer includes the positive-electrode active material in the first aspect of this application.

For example, the positive-electrode current collector includes two back-to-back surfaces in a thickness direction of the positive-electrode current collector, and the positive-electrode film layer is disposed on either or both of the two back-to-back surfaces of the positive-electrode current collector.

In the secondary battery in this application, the positive-electrode current collector may use a metal foil or a composite current collector. For example, as the metal foil, an aluminum foil may be used. The composite current collector may include a polymer material matrix layer and a metal layer formed on at least one surface of the polymer material matrix layer. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

The positive-electrode film layer may optionally include a conductive agent. A type of the conductive agent is not specifically limited, and may be selected by persons skilled in the art as required. For example, the conductive agent used in the positive-electrode film layer may be selected from more than one of superconducting carbon, acetylene black, carbon black, Ketjen black, carbon dots, carbon nanotubes, graphene, and carbon nanofiber.

The positive electrode plate in this application may be prepared by using the method known in the art. For example, the positive-electrode active material, the conductive agent, and a binder are dispersed in a solvent (for example, N-methylpyrrolidone (NMP)) to form a uniform positive electrode slurry; and the positive electrode slurry is applied onto the positive-electrode current collector, and processes such as drying and cold pressing are performed to obtain the positive electrode plate.

### [Negative electrode plate]

The negative electrode plate includes a negative-electrode current collector and a negative-electrode film layer disposed on at least one surface of the negative-electrode current collector, and the negative-electrode film layer includes a negative-electrode active material.

For example, the negative-electrode current collector includes two back-to-back surfaces in a thickness direction of the negative-electrode current collector, and the negative-electrode film layer is disposed on either or both of the two back-to-back surfaces of the negative-electrode current collector.

In the secondary battery in this application, the negative-electrode current collector may use a metal foil or a composite current collector. For example, as the metal foil, a copper foil may be used. The composite current collector may include a polymer material matrix layer and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In the secondary battery in this application, the negative-electrode film layer usually includes a negative-electrode active material, an optional binder, an optional conductive agent, and another optional additive, and is usually formed through drying after a negative electrode slurry is applied. The negative electrode slurry is usually formed by dispersing the negative-electrode active material, the optional conductive agent and binder, and the like in a solvent and stirring them evenly. The solvent may be N-methylpyrrolidone (NMP) or deionized water.

For example, the conductive agent may be selected from more than one of superconducting carbon, acetylene black, carbon black, Ketjen black, carbon dots, carbon nanotubes, graphene, and carbon nanofiber.

For example, the binder may be selected from more than one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

The another optional additive may be, for example, a thickener (for example, sodium carboxymethyl cellulose (CMC-Na)).

In the secondary battery in this application, in addition to the negative-electrode active material, the negative-electrode film layer further optionally includes another commonly-used negative-electrode active material. For example, as the another commonly-used negative-electrode active material, artificial graphite, natural graphite, soft carbon, hard carbon, silicon-based material, tin-based material, and lithium titanate may be listed. The silicon-based material may be selected from more than one of elemental silicon, silicon-oxygen compound, silicon-carbon composite, silicon-nitrogen composite, and silicon alloy. The tin-based material may be selected from more than one of elemental tin, tin-oxygen compound, tin alloy, and the like.

### [Electrolyte]

The electrolyte conducts ions between the positive electrode plate and the negative electrode plate. The electrolyte is not limited to any specific type in this application, and may be selected as required. For example, the electrolyte may be selected from at least one of a solid electrolyte and a liquid electrolyte (that is, an electrolyte solution).

In some embodiments, the electrolyte is an electrolyte solution. The electrolyte solution includes an electrolytic salt and a solvent.

In some embodiments, the electrolytic salt may be selected from more than one of LiPF₆ (lithium hexafluorophosphate), LiBF₄ (lithium tetrafluoroborate), LiClO₄ (lithium perchlorate), LiAsF₆ (lithium hexafluoroborate), LiFSI (lithium bis(fluorosulfonyl)imide), LiTFSI (lithium bistrifluoromethanesulfonimide), LiTFS (lithium trifluoromethanesulfonat), LiDFOB (lithium difluorooxalatoborate), LiBOB (lithium bisoxalatoborate), LiPO₂F₂ (lithium difluorophosphate), LiDFOP (lithium difluorophosphate), and LiTFOP (lithium tetrafluoro oxalate phosphate).

In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), tetramethylene sulfone (SF), methyl sulfone (MSM), ethyl methyl sulfone (EMS), and diethyl sulfone (ESE).

In some embodiments, the electrolyte solution may further optionally include an additive. For example, the additive may include a negative-electrode film-forming additive, or may include a positive-electrode film-forming additive, or may include additives capable of improving some performance of a battery, for example, an additive for improving over-charge performance of the battery, an additive for improving high-temperature performance of the battery, and an additive for improving low-temperature performance of the battery.

### [Separator]

The separator is further included in secondary batteries using an electrolyte solution and some secondary batteries using a solid electrolyte. The separator is disposed between the positive electrode plate and the negative electrode plate to provide separation. The separator is not limited to any specific type in this application, and may be any commonly known porous separator with good chemical stability and mechanical stability. In some embodiments, a material of the separator may be selected from more than one of glass fiber, non-woven fabric, polyethylene, polypropylene, and polyvinylidene fluoride. The separator may be a single-layer thin film or a multi-layer composite thin film, which is not particularly limited. When the separator is a multi-layer composite thin film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package is used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene (PP), polybutylene terephthalate (PBT), and polybutylene succinate (PBS) may be listed.

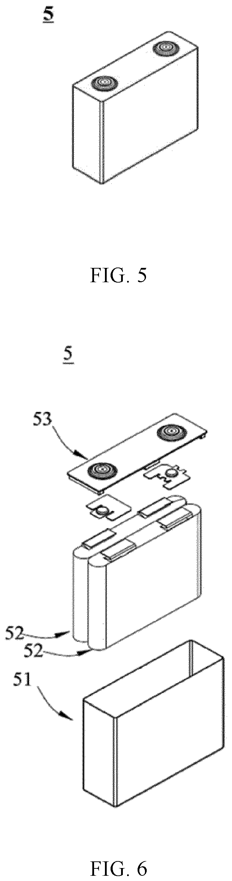

A shape of the secondary battery is not particularly limited in this application, which may be a cylindrical shape, a rectangular shape, or any other shape. For example, FIG. 5 shows a secondary battery 5 of a rectangular structure as an example.

In some embodiments, referring to FIG. 6, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. A positive electrode plate, a negative electrode plate, and a separator form an electrode assembly 52 through winding or lamination. The electrode assembly 52 is packaged in the accommodating cavity. The electrolyte solution is infiltrated into the electrode assembly 52. There may be one or more electrode assemblies 52 in the secondary battery 5, and persons skilled in the art may make choices according to actual requirements.

In some embodiments, secondary batteries may be assembled into a battery module, and the battery module may include one or more secondary batteries. A specific quantity may be chosen by persons skilled in the art based on use and capacity of the battery module.

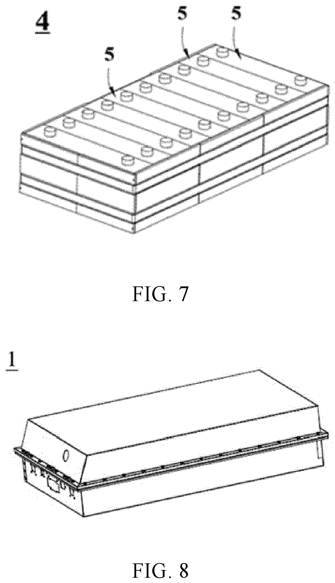

FIG. 7 shows a battery module 4 as an example. Referring to FIG. 7, in the battery module 4, a plurality of secondary batteries 5 may be sequentially arranged in a length direction of the battery module 4. Certainly, the secondary batteries may alternatively be arranged in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

In some embodiments, the battery module may be further assembled into a battery pack, and a quantity of battery modules included in the battery pack may be chosen by persons skilled in the art based on use and capacity of the battery pack.

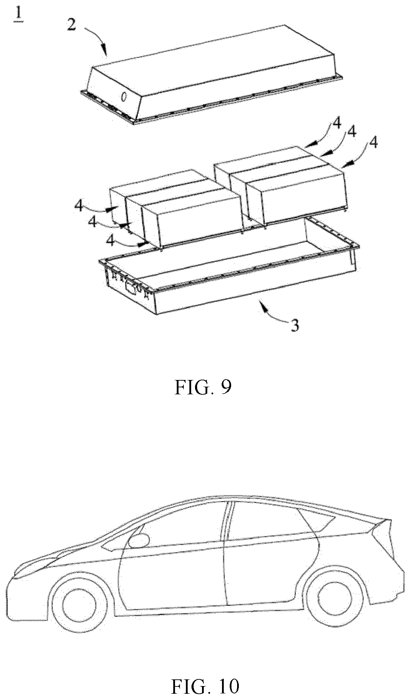

FIG. 8 and FIG. 9 show a battery pack 1 as an example. Referring to FIG. 8 and FIG. 9, the battery pack 1 may include a battery box and a plurality of battery modules 4 arranged in the battery box. The battery box includes an upper box body 2 and a lower box body 3. The upper box body 2 can cover the lower box body 3 and form an enclosed space for accommodating the battery modules 4. The plurality of battery modules 4 may be arranged in the battery box in any manner.

In addition, this application further provides an apparatus. The apparatus includes more than one of the secondary battery, the battery module, or the battery pack provided in this application. The secondary battery, the battery module, or the battery pack may be used as a power source of the apparatus, or an energy storage unit of the apparatus. The apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

As the apparatus, a secondary battery, a battery module, or a battery pack may be selected according to requirements for using the apparatus.

FIG. 10 shows an apparatus as an example. The apparatus is a battery electric vehicle, a hybrid electric vehicle, a plug-in hybrid electric vehicle, or the like. To meet a requirement of the apparatus for high power and high energy density of the secondary battery, a battery pack or a battery module may be used.

In another example, the apparatus may be a mobile phone, a tablet computer, a notebook computer, or the like. The apparatus is usually required to be light and thin, and the secondary battery may be used as a power source.

### Examples

The following describes Examples in this application. Examples described below are merely used to explain this application, but cannot be understood as a limitation on this application. Examples whose technical solutions or conditions are not specified are made based on technical solutions or conditions described in documents in the art, or made based on the product specification. The reagents or instruments used are all conventional products that can be purchased on the market if no manufacturer is indicated.

### Example 1

A positive-electrode active material precursor, lithium hydroxide, and zirconium oxide (ZrO₂) were added into a coulter mixer for mixing for 1h at a molar ratio of element lithium in the lithium hydroxide and a sum of element nickel, element cobalt, and element manganese in the positive-electrode active material precursor of Li/(Ni + Co + Mn) = 1.05 to obtain a mixture. With respect to a total weight of the mixture, an amount of element zirconium added was 2000 ppm, the positive-electrode active material precursor was [Ni_{0.92}Co_{0.05}Mn_{0.03}](OH)₂, and a median particle size by volume D50 was 5 µm.

The resulting mixture was added into a roller kiln for primary sintering for 20h at a sintering temperature of 800°C to obtain a positive-electrode active material matrix, where a primary sintering atmosphere was oxygen.

The resulting positive-electrode active material matrix and CoO were added into a high-speed mixer for mixing for 1h at an amount of element cobalt added of 8000 ppm with respect to a total weight of the positive-electrode active material matrix to obtain a mixture. The mixture was added into the roller kiln for secondary sintering for 10h at a secondary sintering temperature of 600°C to obtain a positive-electrode active material coated with CoO, where a secondary sintering atmosphere was oxygen. Therefore, the resulting positive-electrode active material on which CoO was coated was secondary particles whose median particle size by volume D50 was 5 µm.

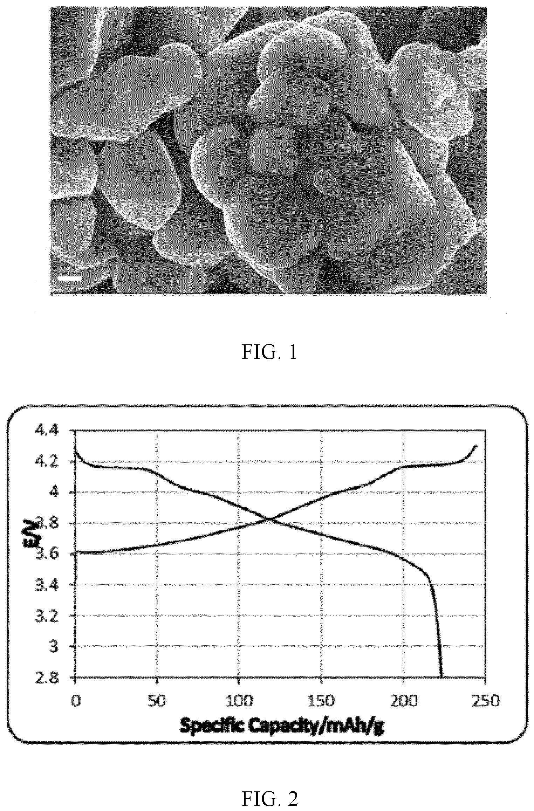

The positive-electrode active material resulting from the secondary sintering on which CoO was coated and a mixture of AlCl₃ and B₂O₃ were added into the high-speed mixer for mixing for 1h at an amount of element aluminum added of 1000 ppm, an amount of element boron added of 1000 ppm, and a weight ratio of element aluminum and element boron added of 1:1 with respect to a total weight of the positive-electrode active material matrix to obtain a mixture. The mixture was added into the roller kiln for third sintering for 5h at a third sintering temperature of 250°C to obtain a final coated positive-electrode active material, where an atmosphere of the third sintering was oxygen. Therefore, the resulting final coated positive-electrode active material was secondary particles whose median particle size by volume D50 was 5 µm. Total thickness of a coating layer measured by a ten-thousandths micrometer was 0.60 µm. A scanning electron microscope image of a positive-electrode active material obtained in Example 1 is shown in FIG. 1. It can be seen from FIG. 1 that the foregoing coating material uniformly coats surfaces of the particles in the positive-electrode active material.

### Example 2

Except that a positive-electrode active material precursor was changed to [Ni_{0.8}Co_{0.1}Mn_{0.1}](OH)₂, a median particle size by volume D50 of the positive-electrode active material precursor was 2.5 µm, a primary sintering temperature was adjusted to 700°C, zirconium oxide (ZrO₂) added during primary sintering was changed to MgO, a primary sintering duration was 10h, an amount of element magnesium added was 5000 ppm, and an amount of element aluminum added was adjusted to 1200 ppm, other conditions were the same as those in Example 1. Therefore, the resulting final coated positive-electrode active material was secondary particles whose median particle size by volume D50 was 2.5 µm. Total thickness of a coating layer measured by a ten-thousandths micrometer was 0.65 µm.

### Example 3

Except that a positive-electrode active material precursor was changed to [Ni_{0.6}Co_{0.2}Mn_{0.2}](OH)₂, a median particle size by volume D50 of the positive-electrode active material precursor was 12 µm, a primary sintering temperature was adjusted to 950°C, zirconium oxide (ZrO₂) added during primary sintering was changed to TiO₂, a primary sintering duration was 15h, an amount of element titanium added was 1000 ppm, and an amount of element aluminum added was adjusted to 1500 ppm, other conditions were the same as those in Example 1. Therefore, the resulting final coated positive-electrode active material was secondary particles whose median particle size by volume D50 was 12 µm. Total thickness of a coating layer measured by a ten-thousandths micrometer was 0.67 µm.

### Example 4

Except that a median particle size by volume D50 of a positive-electrode active material precursor was changed to 2 µm, a primary sintering temperature was adjusted to 900°C, a secondary sintering temperature was adjusted to 500°C, CoO added during secondary sintering was changed to Co(OH)₂, an amount of element cobalt added was 13000 ppm, a secondary sintering duration was adjusted to 5h, and an amount of element aluminum added was adjusted to 1800 ppm, other conditions were the same as those in Example 1. Therefore, the resulting final coated positive-electrode active material was monocrystalline particles whose median particle size by volume D50 was 2 µm. Total thickness of a coating layer measured by a ten-thousandths micrometer was 0.88 µm.

### Example 5

Except that a median particle size by volume D50 of a positive-electrode active material precursor was changed to 4 µm, a primary sintering temperature was adjusted to 950°C, a secondary sintering temperature was adjusted to 700°C, CoO added during secondary sintering was changed to Co₃O₄, an amount of element cobalt added was adjusted to 1000 ppm, a secondary sintering duration was adjusted to 15h, an amount of element aluminum added during third sintering was adjusted to 1200 ppm, and a weight ratio of element aluminum and element boron added was adjusted to 1.2:1, other conditions were the same as those in Example 1. Therefore, the resulting final coated positive-electrode active material was monocrystalline particles whose median particle size by volume D50 was 4 µm. Total thickness of a coating layer measured by a ten-thousandths micrometer was 0.16 µm.

### Example 6

Except that a positive-electrode active material precursor was changed to [Ni_{0.95}Co_{0.02}Mn_{0.03}](OH)₂, a primary sintering temperature was adjusted to 850°C, zirconium oxide (ZrO₂) added during primary sintering was changed to Al₂O₃, an amount of element aluminum added was adjusted to 2000 ppm, a secondary sintering temperature was adjusted to 650°C, CoO added during secondary sintering was changed to cobalt acetate, an amount of element cobalt added was adjusted to 20000 ppm, a third sintering temperature was adjusted to 200°C, a third sintering duration was adjusted to 5h, AlCl₃ and B₂O₃ added during third sintering were changed to Al₂O₃ and H₃BO₃ respectively, an amount of element boron added was adjusted to 2000 ppm, and a weight ratio of element aluminum and element boron added was adjusted to 0.5:1, other conditions were the same as those in Example 1. Therefore, the resulting final coated positive-electrode active material was secondary particles whose median particle size by volume D50 was 5 µm. Total thickness of a coating layer measured by a ten-thousandths micrometer was 1.42 µm.

### Example 7

Except that a third sintering temperature was adjusted to 400°C, a third sintering duration was adjusted to 10h, Al₂O₃ added during third sintering was changed to AlCl₃, an amount of element aluminum added was adjusted to 3000 ppm, H₃BO₃ added during third sintering was changed to (C₂H₅O)₃B, an amount of element boron added was adjusted to 1500 ppm, and a weight ratio of the amount of element aluminum and element boron added was adjusted to 2:1, other conditions were the same as those in Example 6. Therefore, the resulting final coated positive-electrode active material was secondary particles whose median particle size by volume D50 was 5 µm. Total thickness of a coating layer measured by a ten-thousandths micrometer was 1.81 µm.

### Example 8

Except that D50 of a positive-electrode active material precursor was changed to 10 µm, a third sintering temperature was adjusted to 350°C, a third sintering duration was adjusted to 7h, Al₂O₃ added during third sintering was changed to Al₂(SO₄)₃, an amount of element aluminum added was adjusted to 500 ppm, H₃BO₃ added during third sintering was changed to BCl₃, an amount of element boron added was adjusted to 500 ppm, and a weight ratio of the amount of element aluminum and element boron added was adjusted to 1:1, other conditions were the same as those in Example 6. Therefore, the resulting final coated positive-electrode active material was secondary particles whose median particle size by volume D50 was 10 µm. Total thickness of a coating layer measured by a ten-thousandths micrometer was 1.15 µm.

### Example 9

Except that an amount of element cobalt added was adjusted to 30000 ppm, an amount of element aluminum added was adjusted to 5000 ppm, and an amount of element boron added was adjusted to 5000 ppm, other conditions were the same as those in Example 8. Therefore, the resulting final coated positive-electrode active material was secondary particles whose median particle size by volume D50 was 10 µm. Total thickness of a coating layer measured by a ten-thousandths micrometer was 2.85 µm.

### Example 10

Except that an amount of element aluminum added was adjusted to 5000 ppm, an amount of element boron added was adjusted to 1000 ppm, and a weight ratio of the amount of element aluminum and element boron added was adjusted to 5:1, other conditions were the same as those in Example 8. Therefore, the resulting final coated positive-electrode active material was secondary particles whose median particle size by volume D50 was 10 µm. Total thickness of a coating layer measured by a ten-thousandths micrometer was 1.35 µm.

### Example 11

Except that a median particle size by volume D50 of a positive-electrode active material precursor was adjusted to 18 µm, other conditions were the same as those in Example 8. Therefore, the resulting final coated positive-electrode active material was secondary particles whose median particle size by volume D50 was 18 µm. Total thickness of a coating layer measured by a ten-thousandths micrometer was 1.10 µm.

### Example 12

Except that a median particle size by volume D50 of a positive-electrode active material precursor was adjusted to 9 µm, other conditions were the same as those in Example 5. Therefore, the resulting final coated positive-electrode active material was monocrystalline particles whose median particle size by volume D50 was 9 µm. Total thickness of a coating layer measured by a ten-thousandths micrometer was 0.10 µm.

### Comparative Example 1

A positive-electrode active material precursor, lithium hydroxide, and zirconium oxide (ZrO₂) were added into a coulter mixer for mixing for 1h at a molar ratio of lithium in the lithium hydroxide and a sum of element nickel, element cobalt, and element manganese in the positive-electrode active material precursor of Li/(Ni + Co + Mn) = 1.05 to obtain a mixture. With respect to a total weight of the mixture, an amount of element zirconium added was 2000 ppm, the positive-electrode active material precursor was [Ni_{0.92}Co_{0.05}Mn_{0.03}](OH)₂, and a median particle size by volume D50 of the positive-electrode active material precursor was 5 µm.

The resulting mixture was added into a roller kiln for primary sintering for 20h at a sintering temperature of 800°C to obtain a positive-electrode active material, where a primary sintering atmosphere was oxygen.

Therefore, the resulting positive-electrode active material was secondary particles whose median particle size by volume D50 was 5 µm.

### Comparative Example 2

Based on that the positive-electrode active material obtained through sintering in Comparative Example 1 was used as a positive-electrode active material matrix, the positive-electrode active material matrix and AlCl₃ were added into a high-speed mixer for mixing for 1h at an amount of element aluminum added of 1000 ppm with respect to a total weight of the positive-electrode active material matrix to obtain a mixture. The mixture was added into a roller kiln for secondary sintering for 10h at a secondary sintering temperature of 300°C to obtain a positive-electrode active material coated with AlCl₃, where an atmosphere of the secondary sintering was oxygen. Therefore, the resulting final coated positive-electrode active material was secondary particles whose median particle size by volume D50 was 5 µm. Total thickness of a coating layer was 0.05 µm.

### Comparative Example 3

Except that AlCl₃ was changed to B₂O₃, and an amount of element boron added was 1000 ppm, other conditions were the same as those in Comparative Example 2. Therefore, the resulting final coated positive-electrode active material was secondary particles whose median particle size by volume D50 was 5 µm. Total thickness of a coating layer was 0.06 µm.

### Comparative Example 4

Except that AlCl₃ was changed to a mixture of AlCl₃ and B₂O₃, an amount of element aluminum added was 1000 ppm, an amount of element boron added was 1000 ppm, and a weight ratio of the amount of element aluminum and element boron added was 1:1, other conditions were the same as those in Comparative Example 2. Therefore, the resulting final coated positive-electrode active material was secondary particles whose median particle size by volume D50 was 5 µm. Total thickness of a coating layer measured by a ten-thousandths micrometer was 0.10 µm.

### Comparative Example 5

Based on that the positive-electrode active material obtained through sintering in Comparative Example 1 was used as a positive-electrode active material matrix, the positive-electrode active material matrix and CoO were added into a high-speed mixer for mixing for 1h, with element cobalt of 8000 ppm added with respect to a total weight of the positive-electrode active material matrix to obtain a mixture. The mixture was added into a roller kiln for secondary sintering for 10h at a secondary sintering temperature of 600°C to obtain a positive-electrode active material coated with CoO, where an atmosphere of the secondary sintering was oxygen. Therefore, the resulting final coated positive-electrode active material was secondary particles whose median particle size by volume D50 was 5 µm. Total thickness of a coating layer measured by a ten-thousandths micrometer was 0.41 µm.

### Comparative Example 6

A positive-electrode active material precursor, lithium hydroxide, and magnesium oxide were added into a coulter mixer for mixing for 1h at a molar ratio of lithium metal in the lithium hydroxide and a sum of element nickel, element cobalt, and element manganese in the positive-electrode active material precursor of Li/(Ni + Co + Mn) = 1.05 to obtain a mixture. With respect to a total weight of the mixture, an amount of element magnesium added was 5000 ppm, the positive-electrode active material precursor was [Ni_{0.8}Co_{0.1}Mn_{0.1}](OH)₂, and a median particle size by volume D50 of the positive-electrode active material precursor was 2.5 µm.

The resulting mixture was added into a roller kiln for primary sintering for 10h at a sintering temperature of 700°C to obtain a positive-electrode active material, where a primary sintering atmosphere was oxygen. Therefore, the resulting positive-electrode active material was secondary particles whose median particle size by volume D50 was 2.5 µm.

### Comparative Example 7

A positive-electrode active material precursor, lithium hydroxide, and TiO₂ were added into a coulter mixer for mixing for 1h at a molar ratio between a molar of lithium metal in the lithium hydroxide and a sum ratio of element nickel, element cobalt, and element manganese in the positive-electrode active material precursor of Li/(Ni + Co + Mn) = 1.05 to obtain a mixture. With respect to a total weight of the mixture, an amount of element titanium added was 1000 ppm, the positive-electrode active material precursor was [Ni_{0.6}Co_{0.2}Mn_{0.2}](OH)₂, and a median particle size by volume D50 of the positive-electrode active material precursor was 12 µm.

The resulting mixture was added into a roller kiln for primary sintering for 15h at a sintering temperature of 950°C to obtain a positive-electrode active material, where a primary sintering atmosphere was oxygen. Therefore, the resulting positive-electrode active material was secondary particles whose median particle size by volume D50 was 12 µm.

Related parameters of the positive-electrode materials in Examples 1 to 12 and Comparative Examples 1 to 7 are shown in Table 1.

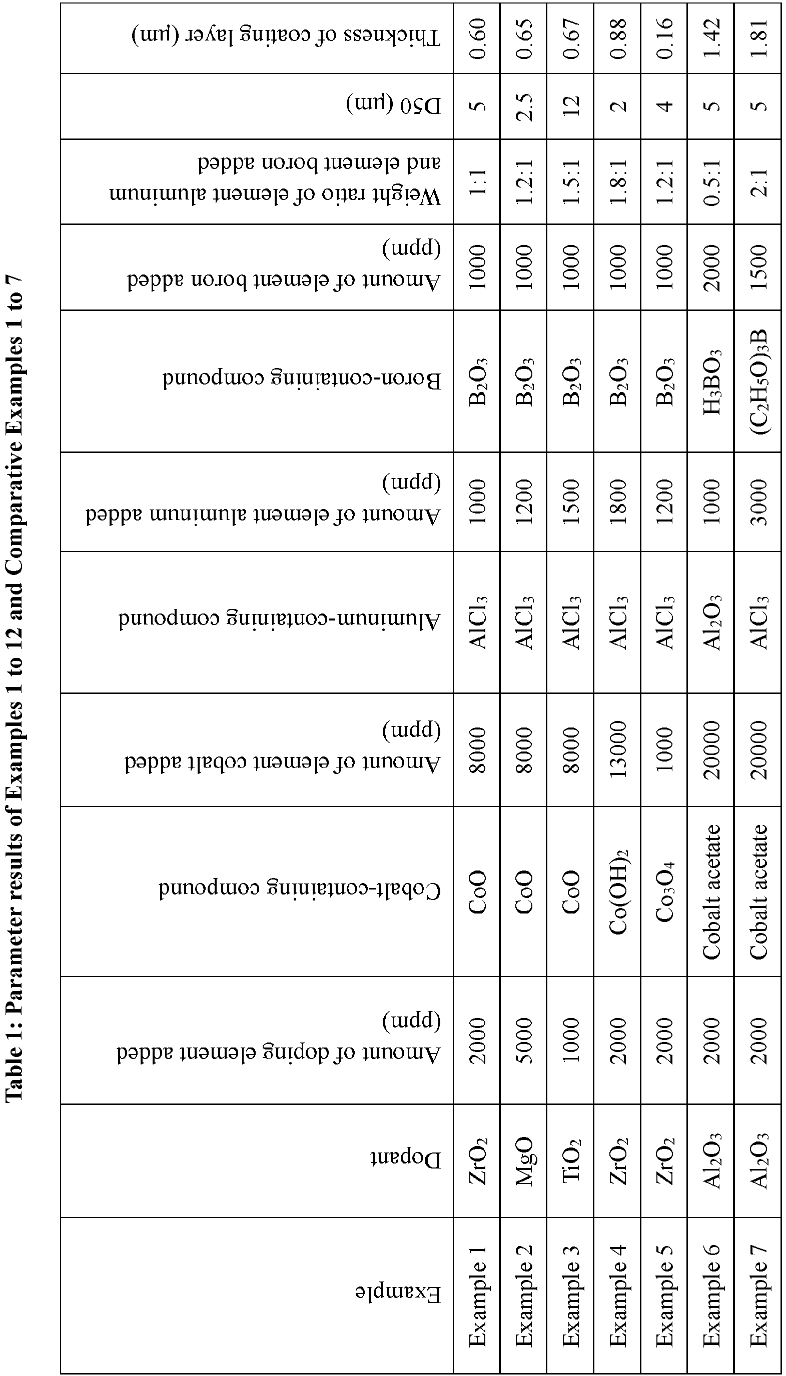

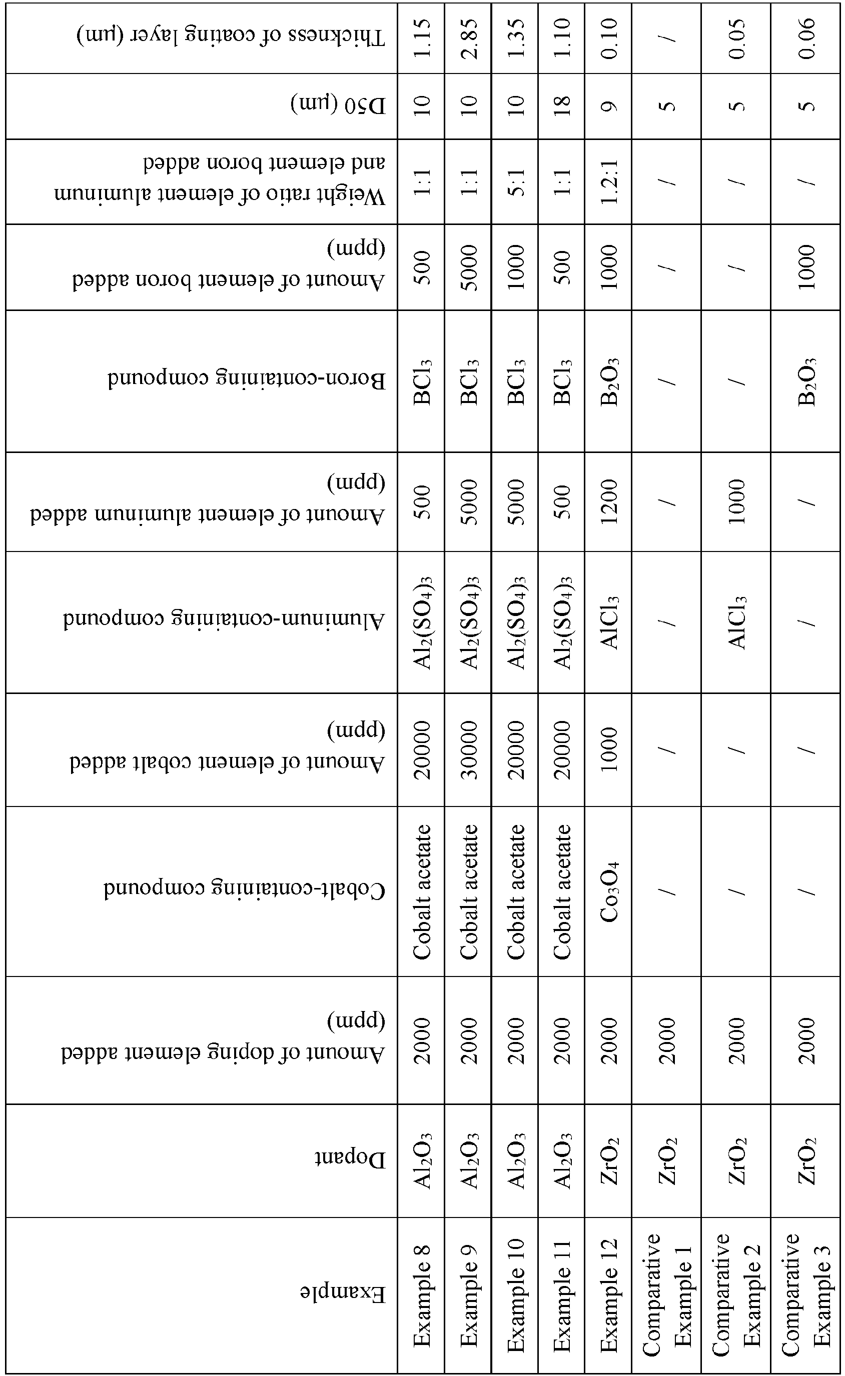

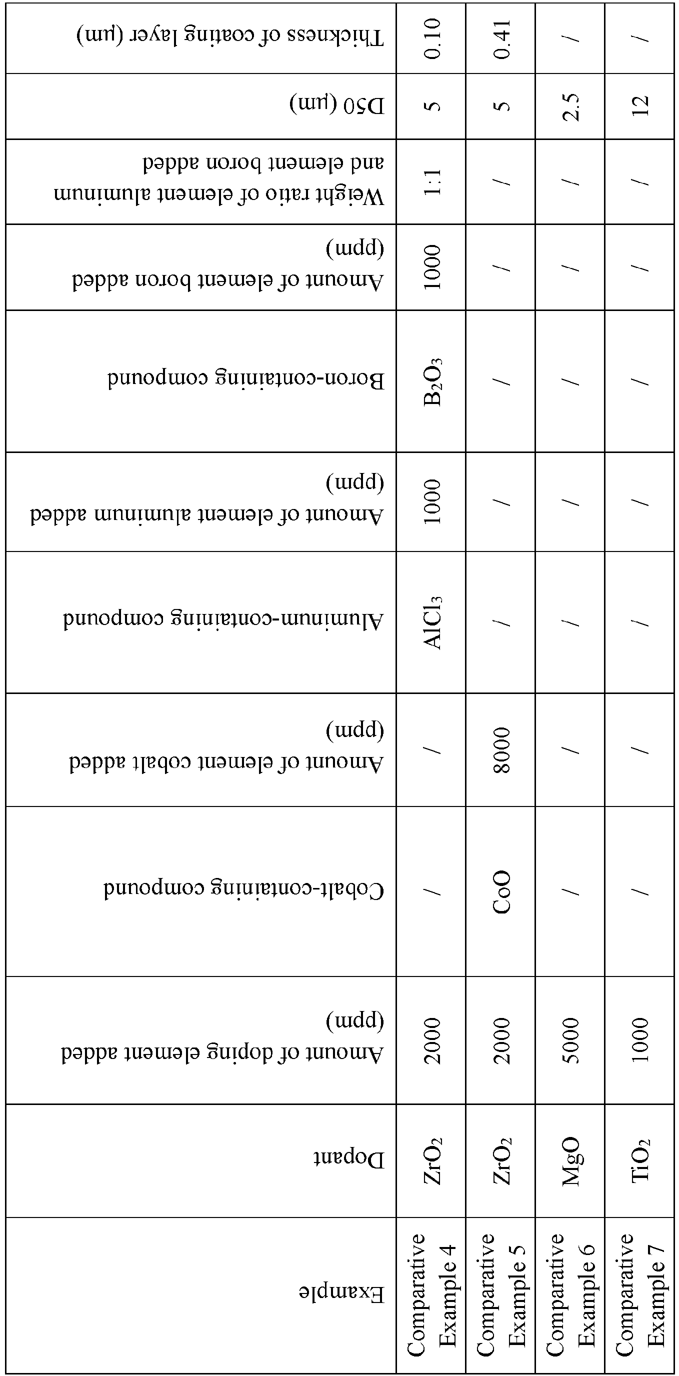

In addition, the positive-electrode active materials obtained in Examples 1 to 12 and Comparative Examples 1 to 7 were separately manufactured into a button cell and a secondary battery, for performance testing. Test results are as shown in Table 2.

### (1) Preparation of button cell

The coated positive-electrode active material in the foregoing Examples and Comparative Examples, polyvinylidene fluoride (PVDF), and conductive carbon were added into a specific amount of N-methylpyrrolidone (NMP) at a ratio of 90:5:5, and were stirred in a drying room to obtain a slurry. The slurry was applied onto an aluminum foil, followed by drying and cold pressing to obtain a positive electrode plate. A lithium sheet was used as a negative electrode, an electrolyte solution was 1 mol/L LiPF₆/(ethylene carbonate (EC) + diethyl carbonate (DEC) + dimethyl carbonate (DMC) at a volume ratio of 1:1:1), and a button cell was assembled in a button box.

### (2) Test for initial gram capacity of button cell

The foregoing prepared button cell was charged to 4.3 V at 0.1C under a voltage of 2.8 V-4.3 V, and then was charged at a constant voltage of 4.3 V to a current less than or equal to 0.05 mA. After being left standing for 2 minutes, a charging capacity in this case was recorded as C0. Then, the button cell was discharged to 2.8 V at 0.1C, and a discharging capacity in this case was an initial discharging capacity, and was recorded as D0. An initial coulomb efficiency was D0/C0^{∗}100%.

The tested discharging capacity value (that is, the initial discharging capacity D0) was divided by a mass of the positive-electrode active material in the button cell to obtain the initial gram capacity of the button cell of the positive-electrode active material.

### (3) Preparation of secondary battery

The positive-electrode active materials in the foregoing Examples and Comparative Examples were used as positive-electrode active substances. The positive-electrode active substance, a conductive agent acetylene black, and a binder polyvinylidene difluoride (PVDF) were fully stirred and uniformly mixed at a weight ratio of 94:3:3 in an N-methylpyrrolidone solvent system, and then the mixture was applied onto an aluminum foil, followed by drying and cold pressing to obtain a positive electrode plate.

A negative-electrode active substance artificial graphite, a conductive agent acetylene black, a binder styrene-butadiene rubber (SBR), and a thickener sodium carboxymethyl cellulose (CMC) were fully stirred and uniformly mixed at a weight ratio of 90:5:2:2:1 in a deionized water solvent system, and then the mixture was applied onto a copper foil, followed by drying and cold pressing to obtain a negative electrode plate.

A polyethylene (PE) porous polymer film was used as a separator.

The positive electrode plate, the separator, and the negative electrode plate were stacked in sequence, so that the separator was disposed between positive and negative electrodes to take an effect of separation, and winding was performed to obtain a bare cell. The bare cell was placed into an outer package, the electrolyte solution used in the preparation of the button cell in (1) was injected, and then the outer package was sealed to obtain a secondary battery.

### (4) Test for initial gram capacity of secondary battery

The foregoing prepared secondary battery was left standing for 5 minutes at a constant temperature of 25°C, and was discharged to 2.8 V at 1/3C. After being left standing for 5 minutes, the secondary battery was charged to 4.25 V at 1/3C, and was charged at a constant voltage of 4.25 V to a current less than or equal to 0.05 mA. After being left standing for 5 minutes, a charging capacity in this case was recorded as C0. Then, the secondary battery was discharged to 2.8 V at 1/3C, and a discharging capacity in this case was an initial discharging capacity, and was recorded as D0.

The tested discharging capacity value (that is, the initial discharging capacity D0) was divided by a mass of the positive-electrode active material in the secondary battery to obtain the initial gram capacity of the positive-electrode active material in fully-charged state.

### (5) 25°C/45°C cycling performance test of secondary battery

The foregoing prepared secondary battery was charged to 4.25 V at 1C under a voltage of 2.8 V-4.25 V at a constant temperature of 25°C or 45°C, and was charged at a constant voltage of 4.25 V to a current less than or equal to 0.05 mA. After being left standing for 5 minutes, the secondary battery was discharged to 2.8 V at 1C, and a capacity was recorded as Dₙ (n = 0, 1, 2, ...). The foregoing operation was repeated, and 300 times of cycles were performed to measure a capacity fading (fading) value.

### (6) 70°C gassing performance test of secondary battery

For the prepared secondary battery of 100% SOC (a voltage protection range was 2.7 V-4.3 V, and a nominal capacity is 2.25 Ah), a drainage method was used to measure an initial battery cell (bare cell) volume before storage, then the secondary battery was stored in a storage furnace at 70°C, and the bare cell was taken out of the storage furnace every 48h. After the bare cell was cooled to a room temperature, a volume of the battery cell was tested again by using the drainage method. The test was finished after storing for 30 days, or storage stopped until the volume swelled more than 50%.

Gas volume of the secondary battery stored at 70°C for 30 days = [battery cell volume of the secondary battery stored at 70°C for 30 days - initial battery cell volume of the secondary battery] ÷ initial discharging capacity D0.

**Table 2: Performance test results of Examples 1 to 8 and Comparative Examples 1 to 7**

| Example | Button cell capacity at 0.1C (mAh/g) | Initial coulomb efficienc y (%) | Fully charge capacity at 1/3C (mAh/g) | Capac ity after 300 cycles at 25°C (%) | Capacit y after 300 cycles at 45°C (%) | 70°C 30-day gas volume (mL/Ah ) |
|---|---|---|---|---|---|---|
| Example 1 | 223 | 92.1 | 210 | 92.7 | 89.5 | 5.09 |
| Example 2 | 208 | 92.8 | 201 | 95.8 | 92.5 | 5.23 |
| Example 3 | 199 | 92.4 | 195 | 96.5 | 93.6 | 5.85 |
| Example 4 | 224 | 93.2 | 211 | 93.4 | 90.2 | 4.21 |
| Example 5 | 222 | 92.9 | 210 | 93.8 | 90.8 | 6.85 |
| Example 6 | 235 | 92.1 | 219 | 90.9 | 87.3 | 7.75 |
| Example 7 | 225 | 92.5 | 212 | 93.2 | 90.1 | 4.01 |
| Example 8 | 223 | 92.3 | 209 | 92.4 | 89.2 | 4.51 |
| Example 9 | 213 | 90.1 | 202 | 90.5 | 87.2 | 4.02 |
| Example 10 | 211 | 89.6 | 200 | 89.1 | 86.5 | 4.32 |
| Example 11 | 214 | 90.3 | 203 | 87.2 | 85.3 | 10.56 |
| Example 12 | 212 | 89.5 | 203 | 89.3 | 87.5 | 13.50 |
| Comparative Example 1 | 212 | 85.1 | 204 | 84.5 | 77.5 | 21.89 |
| Comparative Example 2 | 210 | 86.3 | 201 | 87.1 | 80.2 | 18.26 |
| Comparative Example 3 | 215 | 87.2 | 207 | 86.5 | 79.5 | 19.81 |
| Comparative Example 4 | 214 | 86.8 | 205 | 88.6 | 82.1 | 14.81 |
| Comparative Example 5 | 216 | 89.2 | 206 | 87.4 | 80.7 | 15.97 |
| Comparative Example 6 | 195 | 88.2 | 191 | 88.9 | 82.6 | 18.72 |
| Comparative Example 7 | 189 | 87.3 | 182 | 89.2 | 83.5 | 16.89 |

It can be learnt from the results that, in addition to doping, the positive-electrode active materials obtained in Examples 1 to 12 were further coated with the cobalt-containing compound, the aluminum-containing compound, and the boron-containing compound, thereby better improving energy density, cycling performance, and safety performance. In addition, the initial coulomb efficiency of the positive-electrode active material was further improved.

However, compared with the foregoing, zirconium was merely doped in the positive-electrode active material obtained in Comparative Example 1, magnesium was merely doped in the positive-electrode active material obtained in Comparative Example 6, and titanium was merely doped in the positive-electrode active material obtained in Comparative Example 7. All these positive-electrode active materials were not coated. Therefore, cycling performance and safety performance were poor in Comparative Example 1, and in Comparative Examples 6 and 7, a capacity of the positive-electrode active material was poor, and cycling performance and safety performance were not improved either.

Zirconium was merely doped in the positive-electrode active material obtained in Comparative Example 2, and the positive-electrode active material was coated with only the aluminum-containing compound. Zirconium was merely doped in the positive-electrode active material obtained in Comparative Example 3, and the positive-electrode active material was coated with only the boron-containing compound. Zirconium was merely doped in the positive-electrode active material obtained in Comparative Example 4, and the positive-electrode active material was coated with only the aluminum-containing compound and the boron-containing compound. Zirconium was merely doped in the positive-electrode active material obtained in Comparative Example 5, and the positive-electrode active material was coated with only the cobalt-containing compound. Although the coating was performed in Comparative Examples 2 to 5, compared with non-coating, a capacity of the positive-electrode active material was better. However, because the positive-electrode active material was coated with only some of the cobalt-containing compound, the aluminum-containing compound, and the boron-containing compound, both cycling performance and safety performance were not obviously improved.

In addition, compared with Example 8 by Examples 9 and 10, it can be learnt that energy density, cycling performance, and safety performance in these examples were all better improved. However, coating thickness in Example 9 was too large, and the coating thickness reached to 2.85 µm. Therefore, a capacity was affected and had a tendency of reducing, and transferring of lithium ions during cycling might be affected and cycling performance had a tendency of decreasing. Since a coating ratio in Example 10 was too high, a weight ratio of the element aluminum and the element boron (aluminum: boron) reached to 5:1, a capacity and cycling performance had tendencies of decreasing.

Compared with Example 5 by Example 12 and compared with Example 8 by Example 11, it can be learnt that energy density, cycling performance, and safety performance in these examples were all better improved. However, the median particle sizes by volume D50 of the positive-electrode active materials obtained in Examples 11 and 12 were too large, and therefore a capacity, cycling performance, and safety performance of the positive-electrode active material might be affected to some extent.

It should be noted that this application is not limited to the foregoing Examples. The foregoing embodiments are merely examples, and embodiments having constructions substantially the same as those of the technical idea and having the same effects as the technical idea within the scope of the technical solutions of this application are all included in the technical scope of this application. In addition, within the scope without departing from the essence of this application, various modifications that can be conceived by persons skilled in the art are applied to the embodiments, and other modes constructed by combining some of the constituent elements in the embodiments are also included in the scope of this application.

## Claims

1. A positive-electrode active material, **characterized in that**
the positive-electrode active material comprises a positive-electrode active material matrix and a coating layer, wherein the coating layer coats a surface of the positive-electrode active material matrix,
and the positive-electrode active material matrix is Li₁₊ₐ[NiₓCo_{y}Mn_{z}M_{b}]O₂, wherein 0 < x < 1, 0 ≤ y < 0.3, 0 ≤ z < 0.3, 0 < a < 0.2, 0 < b < 0.2, x + y + z + b = 1, optionally, 0.8 ≤ x < 1, M is selected from more than one of Mg, Ca, Sb, Ce, Ti, Zr, Al, Zn, and B, and the coating layer contains a cobalt-containing compound, an aluminum-containing compound, and a boron-containing compound.

2. The positive-electrode active material according to claim 1, **characterized in that** a weight ratio of an element aluminum and an element boron in the coating layer is 0.5-2:1, and optionally, 1-2:1.

3. The positive-electrode active material according to claim 1 or 2, **characterized in that**
with respect to a total weight of the positive-electrode active material matrix, a weight proportion of a total coating amount of element cobalt, element aluminum, and element boron in the coating layer are 1000 ppm-22000 ppm, and optionally, 1000 ppm-15000 ppm.

4. The positive-electrode active material according to any one of claims 1 to 3, **characterized in that**
with respect to the total weight of the positive-electrode active material matrix, a weight proportion of a coating amount of the element cobalt in the coating layer is 1000 ppm-20000 ppm, optionally, 1000 ppm-19000 ppm, and further optionally, 1000 ppm-13000 ppm.

5. The positive-electrode active material according to any one of claims 1 to 4, **characterized in that**
with respect to the total weight of the positive-electrode active material matrix, a weight proportion of a coating amount of the element aluminum in the coating layer is 100 ppm-3000 ppm, optionally, 100 ppm-2900 ppm, and further optionally, 500 ppm-2000 ppm.

6. The positive-electrode active material according to any one of claims 1 to 5, **characterized in that**
with respect to the total weight of the positive-electrode active material matrix, a coating amount of the element boron in the coating layer is 100 ppm-2000 ppm, optionally, 100 ppm-1900 ppm, and further optionally, 500 ppm-1500 ppm.

7. The positive-electrode active material according to any one of claims 1 to 6, **characterized in that** thickness of the coating layer is 0.01 µm-2 µm, and optionally, 0.1 µm-1 µm.

8. The positive-electrode active material according to any one of claims 1 to 7, **characterized in that**
particles in the positive-electrode active material are secondary particles formed by agglomeration of primary particles; and
optionally, an average particle size of the primary particles in the secondary particles is 100 nm-1000 nm; or
optionally, a median particle size by volume D50 of the positive-electrode active material is 2 µm-15 µm, and further optionally, 2.5 µm-12 µm; or
optionally, a specific surface area of the positive-electrode active material is 0.2 m²/g-1.0 m²/g, and optionally, 0.3 m²/g-0.8 m²/g.

9. The positive-electrode active material according to any one of claims 1 to 8, **characterized in that**
particles in the positive-electrode active material are monocrystalline particles; and
optionally, a median particle size by volume D50 of the positive-electrode active material is 1.0 µm-8.0 µm, and further optionally, 2.0 µm-4.0 µm; or
optionally, a specific surface area of the positive-electrode active material is 0.4 m²/g-2 m²/g, and further optionally, 0.5 m²/g-1.5 m²/g.

10. The positive-electrode active material according to any one of claims 1 to 9, **characterized in that**
the cobalt-containing compound is selected from more than one of cobalt oxide, cobalt salt, cobalt hydroxide, and cobalt oxyhydroxide; or
the aluminum-containing compound is selected from more than one of aluminum oxide, aluminum hydroxide, aluminum salt, and aluminum halide; or
the boron-containing compound is selected from more than one of boron oxide, boron halide, boric acid, borate, and organoboron compound.

11. A manufacturing method of a positive-electrode active material, **characterized by** comprising:
step S1: providing a positive-electrode active material matrix, wherein a chemical formula of the positive-electrode active material matrix is Li₁₊ₐ[NiₓCo_{y}Mn_{z}M_{b}]O₂, 0 < x < 1, 0 ≤ y < 0.3, 0 ≤ z < 0.3, 0 < a < 0.2, 0 < b < 0.2, and M is selected from more than one of Mg, Ca, Sb, Ce, Ti, Zr, Al, Zn, and B;
step S2: mixing the positive-electrode active material matrix and a cobalt-containing compound, and performing sintering to obtain an intermediate; and
step S3: mixing the intermediate, an aluminum-containing compound, and a boron-containing compound, and performing sintering to obtain the positive-electrode active material,
wherein the positive-electrode active material comprises the positive-electrode active material matrix and a coating layer, the coating layer coats a surface of the positive-electrode active material matrix, and the positive-electrode active material matrix is Li₁₊ₐ[NiₓCo_{y}Mn_{z}M_{b}]O₂, 0 < x < 1,0 ≤ y < 0.3, 0 ≤ z < 0.3, 0 < a < 0.2, 0 < b < 0.2, optionally, 0.8 ≤ x < 1, M is selected from more than one of Mg, Ca, Sb, Ce, Ti, Zr, Al, Zn, and B, and the coating layer comprises a cobalt-containing compound, an aluminum-containing compound, and a boron-containing compound.

12. The manufacturing method of the positive-electrode active material according to claim 11, **characterized in that**
in step S1, a lithium salt, a nickel cobalt manganese-containing positive-electrode active material precursor, and an M-containing compound are mixed to obtain a mixture a, and the mixture a is sintered to obtain the positive-electrode active material matrix;
in step S2, the positive-electrode active material matrix and the cobalt-containing compound are mixed to obtain a mixture b, and the mixture b is sintered to obtain the intermediate; and
in step S3, the intermediate, the aluminum-containing compound, and the boron-containing compound are mixed to obtain a mixture c, and the mixture c is sintered to obtain the positive-electrode active material.

13. The manufacturing method of the positive-electrode active material according to claim 12, **characterized in that**
in step S1, the lithium salt, the nickel cobalt manganese-containing positive-electrode active material precursor, and the M-containing compound are mixed at a molar ratio of element lithium in the lithium salt and a sum of element nickel, element cobalt, and element manganese in the nickel cobalt manganese-containing positive-electrode active material precursor of Li/(Ni + Co + Mn) = 0.9-1.1, and at a doping percentage of element M of 1000 ppm-5000 ppm.

14. The manufacturing method of the positive-electrode active material according to any one of claims 11 to 13, **characterized in that**
in step S1, a sintering temperature is 700°C-950°C; a sintering duration is 10h-20h; and a sintering atmosphere is air or oxygen.

15. The manufacturing method of the positive-electrode active material according to any one of claims 11 to 14, **characterized in that**
in step S2, with respect to a total weight of the positive-electrode active material matrix, an amount of element cobalt added in the cobalt-containing compound is 1000 ppm-20000 ppm, optionally, 1000 ppm-19000 ppm, and further optionally, 1000 ppm-13000 ppm.

16. The manufacturing method of the positive-electrode active material according to any one of claims 11 to 15, **characterized in that**
in step S2, a sintering temperature is 500°C-700°C; a sintering duration is 5h-15h; and a sintering atmosphere is air or oxygen.

17. The manufacturing method of the positive-electrode active material according to any one of claims 11 to 16, **characterized in that**
in step S3, with respect to the total weight of the positive-electrode active material matrix, an amount of element aluminum added in the aluminum-containing compound is 100 ppm-3000 ppm, optionally, 100 ppm-2900 ppm, and further optionally, 500 ppm-2000 ppm; or
in step S3, with respect to the total weight of the positive-electrode active material matrix, an amount of element boron added in the boron-containing compound is 100 ppm-2000 ppm, optionally, 100 ppm-1900 ppm, and further optionally, 500 ppm-1500 ppm.

18. The manufacturing method of the positive-electrode active material according to any one of claims 11 to 17, **characterized in that**
in step S3, a sintering temperature is 200°C-500°C, and optionally, 200°C-400°C; a sintering duration is 5h-15h, and optionally, 5h-10h; and a sintering atmosphere is air or oxygen.

19. A secondary battery, **characterized by** comprising:
the positive-electrode material according to any one of claims 1 to 10 or the positive-electrode active material manufactured by using the manufacturing method of the positive-electrode active material according to any one of claims 11 to 18.

20. Abattery module, **characterized by** comprising the secondary battery according to claim 19.

21. A battery pack, **characterized by** comprising the battery module according to claim 20.

22. An apparatus, **characterized by** comprising more than one of the secondary battery according to claim 19, the battery module according to claim 20, or the battery pack according to claim 21.
